# EUROPEAN PATENT APPLICATION

(11) **EP 1 502 852 A1**
(43) Date of publication of application: **02.02.2005**
(21) Application number: 04017945.9
(22) Date of filing: 29.07.2004
(51) Int. Cl.: B64C 27/20, A63H 29/22, B64C 39/02

(54) **A flying machine**

(30) Priority: 30.07.2003 IT TO20030588
(71) Applicant: C.R.F. Società Consortile per Azioni, 10043 Orbassano (TO) (IT)
(72) Inventor: Perlo, Pietro, 10043 Orbassano (Torino) (IT); Bollea, Denis, 10043 Orbassano (Torino) (IT); Pairetti, Bartolo, 10043 Orbassano (Torino) (IT); Alacqua, Stefano, 10043 Orbassano (Torino) (IT); Finizio, Roberto, 10043 Orbassano (Torino) (IT); Carvignese, Cosimo, 10043 Orbassano (Torino) (IT); Repetto, Piermario, 10043 Orbassano (Torino) (IT); Innocenti, Gianfranco, 10043 Orbassano (Torino) (IT)
(74) Representative: Quinterno, Giuseppe

(57) **Abstract**

The flying machine (1) comprises
a supporting structure (2) including a central rotational support (3) having a vertical axis connected to an essentially horizontal, preferably annular, peripheral support part (4), coaxial with the central support (3),
at least one upper rotor (6) including a central hub (7) rotatable about the axis of the central support (3) of the supporting structure (2), an outer channel-section ring (8) supported by the peripheral part (4) of the supporting structure (2) by contactless suspension means (23-27), preferably magnetic suspension means, and a plurality of blades (9) which extend from the hub (7) to the channel-section ring (8) and which are inclined with respect to the horizontal plane; and
motor devices (40-43; 50-53) carried at least partially by the peripheral part (4) of the supporting structure (2) and operable to cause rotation of the rotor (6) with respect to this structure (2) in a predetermined direction.

## Description

The present invention relates to a flying machine having a new and original configuration allowing it to be used with great flexibility in a multiplicity of fields of application with or without a pilot on board.

The flying machine according to the invention is essentially characterised in that it comprises
a supporting structure including a central rotational support, having a vertical axis, connected to a peripheral, essentially horizontal, support part coaxial with said central support,
at least one upper rotor including a central hub mounted rotatably about the central support axis of the supporting structure, an outer ring having an inwardly open channel section supported by the peripheral part of the supporting structure via contactless suspension means, preferably magnetic suspension means, and a plurality of blades which extend between the hub and the channel section ring and which are inclined with respect to the horizontal plane, and
motor means carried at least partially by the peripheral part of the supporting structure and able to cause rotation of the rotor relative to the said structure in a predetermined direction.

In a preferred embodiment the flying machine further includes a lower rotor including a central hub rotatable about the axis of the central rotational support of the supporting structure, an outer channel section ring which is likewise supported by the peripheral part of the supporting structure by contactless suspension means, preferably magnetic suspension means, and a plurality of blades which extend between the channel section ring and the hub and which are inclined with respect to the horizontal plane oppositely from the blades of the upper rotor;
the said motor means being arranged to cause rotation of the lower rotor relative to the supporting structure in an opposite direction from that of the upper rotor.

The flying machine according to the invention is usable as a vertical take off aircraft having high efficiency and stability, and as a micro aircraft for environmental monitoring systems or UCAV weapon support systems, and for many other applications which will be referred to hereinbelow.

Further characteristics and advantages of the invention will appear from the following detailed description given purely by way of non-limitative example, with reference to the attached drawings, in which:

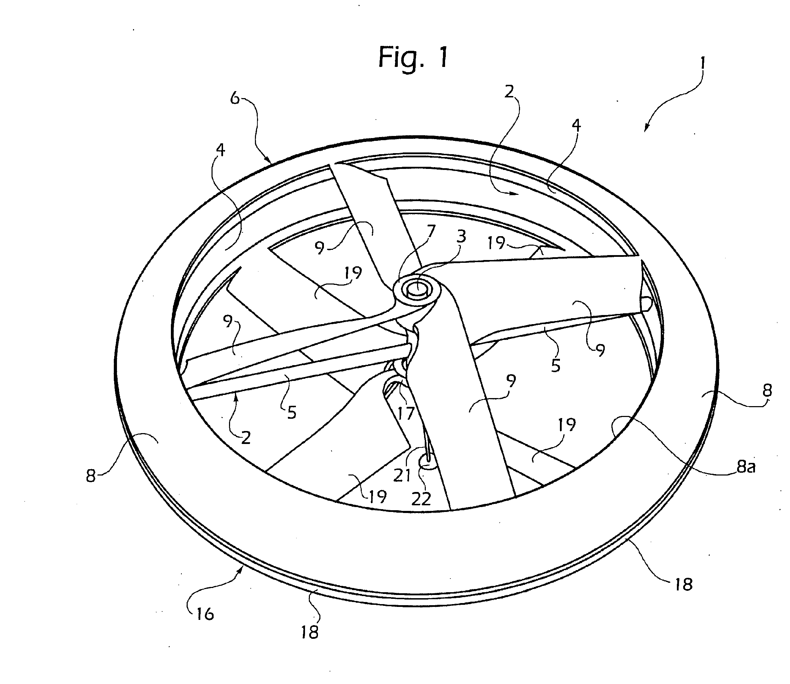

Figure 1 is a perspective view of a flying machine according to the invention;

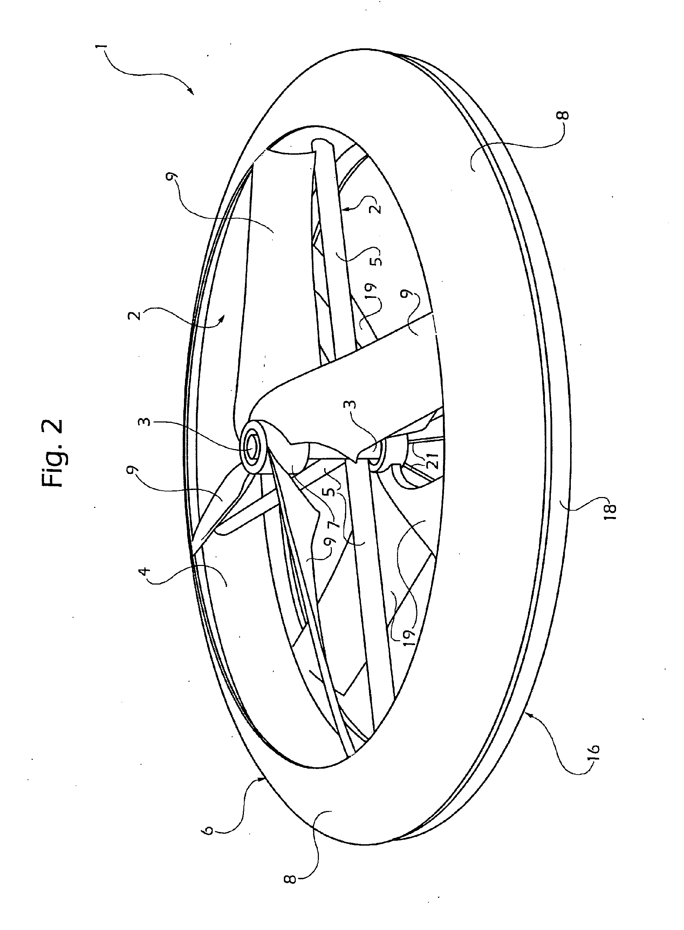

Figure 2 is another perspective view of the flying machine according to Figure 1;
Figure 3 is a side elevation view of the machine of the preceding Figures;
Figure 4 is a plan view from above of the machine of the preceding Figures;
Figure 5 is a perspective view of the upper rotor of the machine of the preceding Figures;
Figure 6 is a perspective view of the lower rotor of the machine of Figures from 1 - 4;
Figure 7 is a perspective view of the supporting structure of a machine formed according to the preceding Figures;
Figure 8 is a partial view in transverse section of a machine according to the present invention;
Figures 9 and 10 are partial views in transverse section of variant embodiments of the machine according to the invention;
Figure 11 is a partially sectioned perspective view of a further variant embodiment of the machine according to the invention;
Figure 12 shows a flying machine according to the invention used for the transport of objects;
Figure 13 shows a machine according to the invention in a configuration provided with a passenger compartment for at least one passenger;
Figure 14 is a side elevation view of a variant embodiment of the flying machine according to the invention;
Figure 15 is a plan view from above of a ring of a rotor of the machine according to the invention; and
Figure 16 is a linearised view of the ring of Figure 15 in section taken on a median circumferential line indicated with XVI-XVI in this Figure.

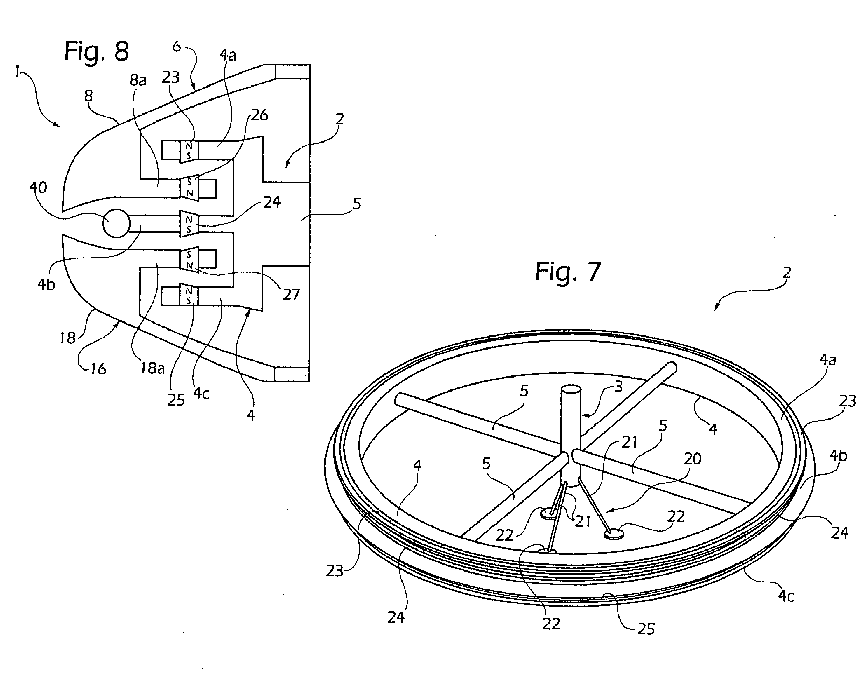

In the drawings a flying machine according to the present invention is generally indicated 1.
In the illustrated embodiment the flying machine 1 comprises a supporting structure generally indicated 2 (see in particular Figure 7).

The supporting structure 2 comprises a central rotational support 3 having a vertical axis, connected to an essentially horizontal peripheral support part 4 coaxial with this central support 3.

In the illustrated embodiment the central rotational support is constituted by a simple cylindrical pin 3 and the peripheral support part 4 is essentially a ring connected to this pin 3 by means of a plurality of spokes indicated 5.

In alternative embodiments, not illustrated in the drawings, the central rotational support could, in place of a pin, comprise a cylindrical support having a vertical axis, in the form of a bush.

Instead of a ring the peripheral support part 4 could comprise a plurality of annular segments interconnected to the central rotational support by means of respective spokes.

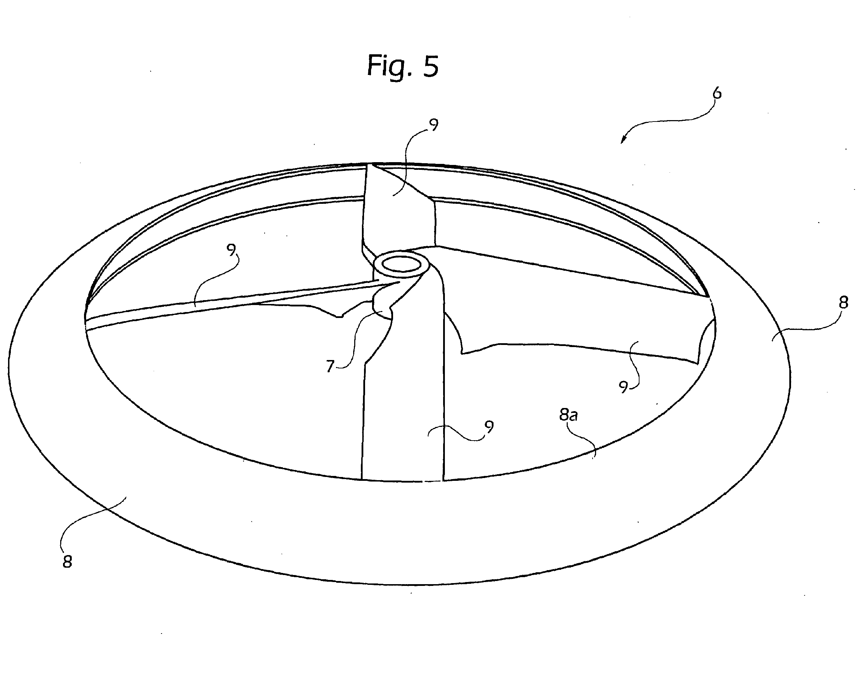

The flying machine 1 further includes an upper rotor generally indicated 6 (see in particular Figure 5). This rotor comprises a central tubular hub 7 mounted rotatably about the central support pin 3 of the supporting structure.

The upper rotor 6 further has an outer ring 8 of radially inwardly open outwardly faired channel section supported by the peripheral ring 4 of the supporting structure 2 by way of contactless suspension means. In the embodiment which will be described hereinafter with reference to the drawings these contactless suspension means are of magnetic suspension type.

Finally, the upper rotor 6 comprises a plurality of essentially radial blades 9 which extend between the hub 7 and outer ring 6 and which are inclined with respect to the horizontal plane.

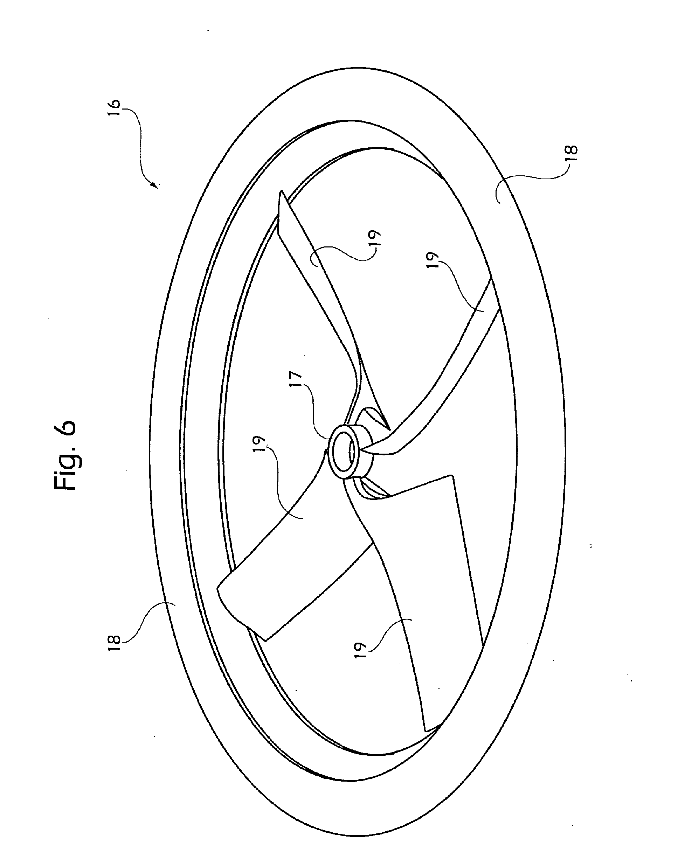

The machine 1 further includes a lower rotor generally indicated 16, which in a manner similar to the upper rotor includes a central hub 17 rotatable about the pin 3 of the supporting structure 2, an outer ring 18 likewise of inwardly open outwardly faired channel section and also likewise supported by the peripheral ring 4 of the supporting structure 2 by contactless suspension means, preferably of magnetic type, and a plurality of blades 19 which extends between the outer ring 18 and the hub 17 (see in particular Figure 6).

The blades 19 of the lower rotor 16 are inclined with respect to the horizontal plane but oppositely with respect to the blades 9 of the upper rotor 6.

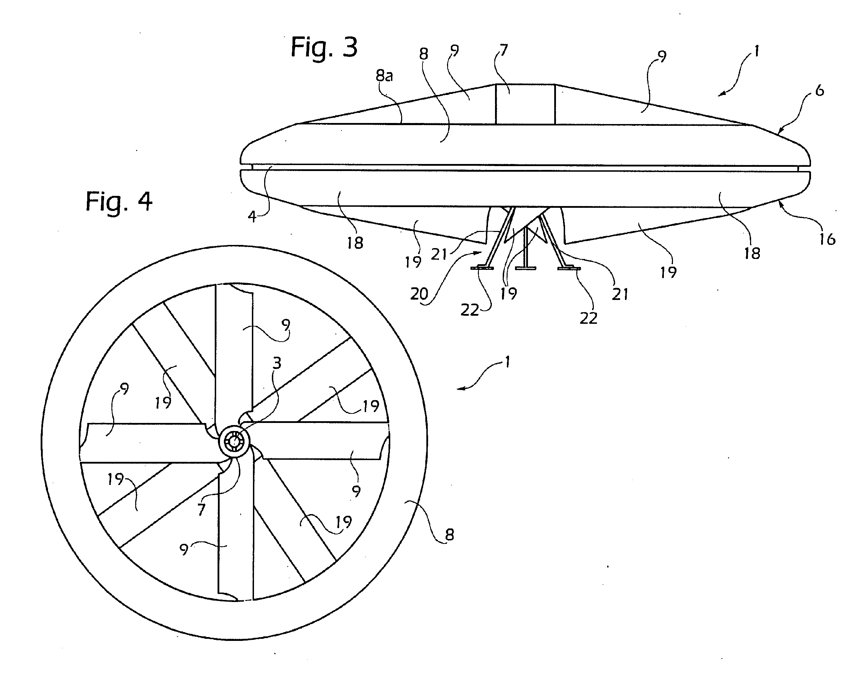

As will be appreciated in particular by observing Figure 3, between the channel shape ring 8 of the upper rotor 6 and the hub 7 thereof the blades 9 extend at least in part above the upper edge 8a of this channel section ring.

Similarly, between the channel section ring 18 of the lower rotor 16 and the associated hub 17 the blades 19 of the lower rotor 16 extend at least in part below the lower edge 18a of this channel section ring 18. However, in the lower rotor 16 the central tubular hub 17 is elevated with respect to the lower edges of the associated blades 19. At the lower end of the central pin 3 of the supporting structure 2 there is connected an undercarriage structure generally indicated 20 (see for example Figures 3 and 7) on which the flying machine stands when on the ground. In the illustrated embodiment the structure 20 includes a plurality of legs 21 provided with respective terminal feet 22.

The rings 8 and 18 of the counter-rotating rotors 6 and 16 preferably have, in transverse section, a profile of essentially wing-like type. These rings, overall, thus constitute a sort of "aerofoil" formed by two parts which, by rotating in opposite senses, "see" the air speed with opposite signs thus maximising the velocity difference between the airflow over the upper profile and the airflow over the lower profile.

As already mentioned above, the rotors 6 and 16 are supported by the supporting structure 2 in a rotatable manner about the axis of the central pin 3 by contactless suspension means, in particular of magnetic type.

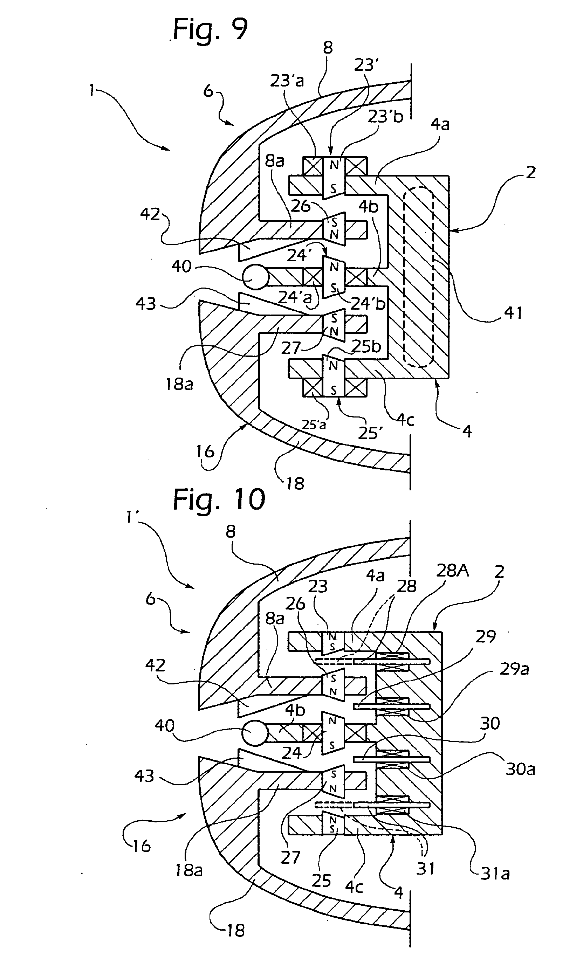

A possible configuration of such magnetic suspension means is showing in Figure 8.

As seen in this Figure, in the illustrated embodiment the peripheral ring part 4 of the supporting structure 2 has a transverse section in the form of a trident, that is a fork with three prongs 4a, 4b and 4c which are essentially horizontal and vertically superimposed. In the arrangement shown in the drawings, these branches or prongs 4a, 4b and 4c extend radially outwardly of the ring 4. An embodiment is, however, conceivable in which these branches or prongs extend radially inwardly from the ring 4.

The prongs 4a, 4b and 4c of the ring 4 carry respective annular arrays of preferably continuous permanent magnets 23, 24 and 25. These magnets have an upper magnetic polarity and an opposite lower polarity.

The permanent magnets carried by the three prongs are coaxial with one another and vertically superimposed.

The rings 8 and 18 of the rotors 6 and 16 have an essentially C or V shape in transverse section with a respective inner branch 8a, 18a which interpenetrates between respective prongs of the peripheral ring 4 of the supporting structure 2. In particular, the branch 8a of the ring 8 of the rotor 6 extends between the prongs 4a and 4b whilst the branch 18a of the ring 18 of the lower rotor 16 extends between the prongs 4b and 4c.

The branches 8a and 18a of the two rotors 6 and 18 are also provided with respective annular arrays of permanent magnets 26 and 27, coaxial and vertically aligned with those of the ring 4 of the supporting structure 2.

The permanent magnets 26 and 27 of the rotors 6 and 16 are vertically polarised and have an upper polarity and an opposite lower polarity so that the said magnets are able to interact, preferably by repulsion with the permanent magnets 23, 24 and 25 of the supporting structure 2.

Preferably, as seen in Figures 8 - 11, the facing surfaces of the magnets 23-27 are inclined in parallel pairs in such a way that as well as achieving vertical suspension of the rotors 6 and 16 they also provide a centring effect thereof relative to the supporting structure 2. If the facing surfaces of the magnets were not inclined but horizontal, the centring of the rotors would be guaranteed predominantly by the pin 3.

The arrangement is in any event such that the counter-rotating rotors 6 and 16 are capable of turning about the axis of the pin 3 of the supporting structure 2 without any contact, and likewise without friction with the peripheral ring 4 of this structure.

As will be more clearly seen hereinbelow, the rotors 6 and 16 are associated with motor means able to cause simultaneous rotation thereof in opposite senses.

For movement of the machine 1 in the conventional X-Y plane (horizontal movement) the attitude of these rotors can be varied with respect to the supporting structure 2 that is to say the angle formed between the plane of rotation of the rotors 6 and 16 and the general plane of the ring 4 of the supporting structure can be varied.

In a first embodiment, illustrated schematically in Figure 9, this can be achieved in the following manner.

The prongs 4a, 4b and 4c of the peripheral ring 4 of the supporting structure comprise at least some electromagnets, indicated 23', 24' and 25' in Figure 9, possibly alternating with permanent magnets. These electromagnets comprise respective exitation windings 23'a, 24'a and 25'a associated with respective cores or pole pieces 23'b, 24'b, 25'b. The arrangement is such that exitation of the windings of the electromagnets 23', 24' and 25' is such as to generate a controlled magnetic field with the polarities indicated N and S in Figure 9.

By modulating the exitation of these electromagnets it is possible to achieve a controlled local alteration in the magnetic field generated by the array of magnets of the ring 4 of the supporting structure and correspondingly to vary the aspect angle of the rotors 6 and 16 relative to this supporting structure. The electromagnets can be used to adjust the distance between the rotors and the said prongs and in general to avoid oscillation of the rotors. Sensor means, for example for sensing magnetic fields, located on the prongs, can be utilised for this purpose to measure the distance from the prongs to the rotors.

In a variant embodiment shown in Figure 10 the magnets 23, 24 and 25 associated with the peripheral ring 4 of the supporting structure are of permanent type. When necessary, a variation in the aspect of the rotors 6 and 16 is achieved by movable bulkheads or blades 28, 29, 30 and 31 radially and controllably displaceable in a selective manner relative to the peripheral ring 4 of the supporting structure.

The ring 4 is, for example, provided with a circumferential continuous or discontinuous array of such bulkheads or blades, which are selectively radially displaceable, for example by means of respective actuators such as the solenoids indicated 28a - 31a in Figure 10, to extend in a controlled manner within the air gap between the magnets of the supporting structure 2 and the magnets of the rotors 6 and 16 (as is illustrated in broken outline for the bulkheads 28 and 31 in Figure 10), for the purpose of locally modifying the distribution of the magnetic field and consequently the attitude of the rotors relative to the supporting structure.

The electrical energy for excitation of the electromagnets 23'-25' of Figure 9, or for excitation of the actuators associated with the movable bulkheads or blades 28-31 of Figure 10 can be provided by on-board electric accumulators of type known per se and not illustrated, and/or by electricity generation means of type also known per se.

In a flying machine 1 according to the invention the motor devices used to cause counter-rotation of the rotors 6 and 16 are in all cases located peripherally, that is to say spaced form the central pin 3.

In a first embodiment, shown in Figures from 8 to 10, these motor devices comprise a plurality of propulsors 40 operating in a pulsed detonation regime or in a deflagration regime, fixed to the peripheral ring 4 of the supporting structure 2, preferably in radially outer position with respect to the magnets and/or the electromagnets carried by this ring. The combustion propulsors 40, of type known per se, can be supplied with fuel stored in reservoirs which can be incorporated in the peripheral ring 4 and/or preferably in the spokes 5 which interconnect this ring to the central pin 3 of the supporting structure. By way of example in Figure 9 the broken outline 41 indicates the shape of an annular tank fitted in the ring 4 of the supporting structure 2. The combustors can operate with liquid or gaseous fuel and the combustion supporter is preferably air, but for some configurations a suitable tank for combustion supporter could be utilised.

The ducts for introducing the fuel to the combustors 40 are not shown in the drawings, but their provision does not pose problems for those skilled in the art.

The combustors 40 are arranged to direct, in operation, respective streams of burnt gas towards blade-like formations 42 and 43 in the rings 8 and 18 of the rotors 6 and 16 which are thus driven to rotate in the manner of a turbine.

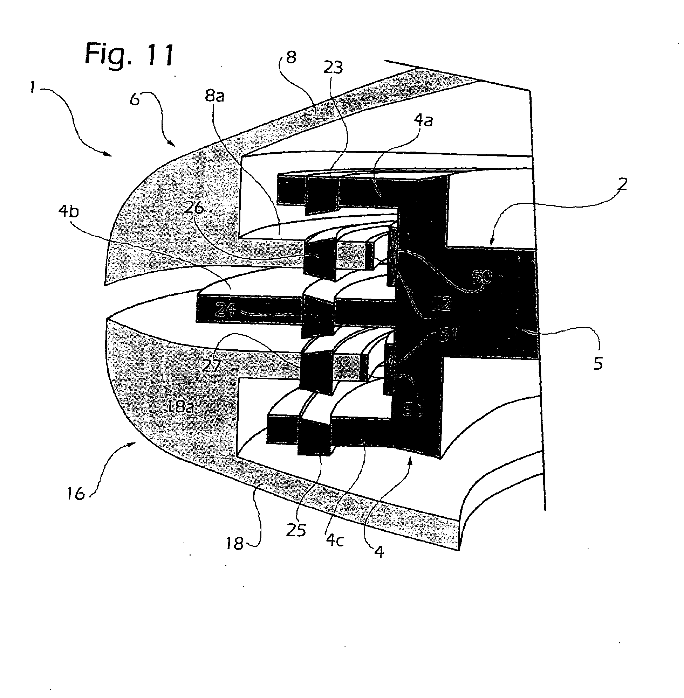

In an alternative embodiment, schematically illustrated in figure 11, the rotation of the rotors 6 and 16 is achieved by means of an electric motor which includes stator windings 50 and 51 conveniently disposed in the spaces defined between the prongs 4a, 4b and 4c of the peripheral ring 4 of the supporting structure 2, and corresponding annular arrays of rotor permanent magnets 52 and 53 carried at the ends of the inner branches 8a and 18 of the rings of the rotors 6 and 16. The permanent magnets 52 and 53 face the windings 50 and 51.

Current is supplied to the windings 50 and 51 by means of the energy stored in on-board accumulator batteries (not illustrated) and an associated electronic control unit of type known per se.

The electric motor machine utilised to drive the counter-rotating rotors 6 and 16 to rotate can possibly be of reversible type so as to be able to function as an electric generator in order partially to recharge the accumulators in phases of flight in which the rotors can operate in deceleration.

The flying machine according to the invention is conveniently provided with an inertial stabilisation platform for maintaining the supporting structure horizontal.

In particular, the machine can be provided in a manner known per se with sensor devices for inertial navigation, including gyroscopes and accelerometers, magnetic sensors formed with MEMS technology and satellite receivers operating according to the GPS position system.

The machine can also be provided with one or more video camera, both of the conventional type and the infra-red type, with CMOS sensors or integrated photodiode matrices. Such video cameras can serve also as systems for flight stabilisation by means of optical flow techniques, such as anti-collision systems and altitude control systems during take off and landing phases etc.

The video cameras can also serve for recording images.

The on-board electronics may, moreover, include means operable to transmit data to a remote base, for example, at radio frequency.

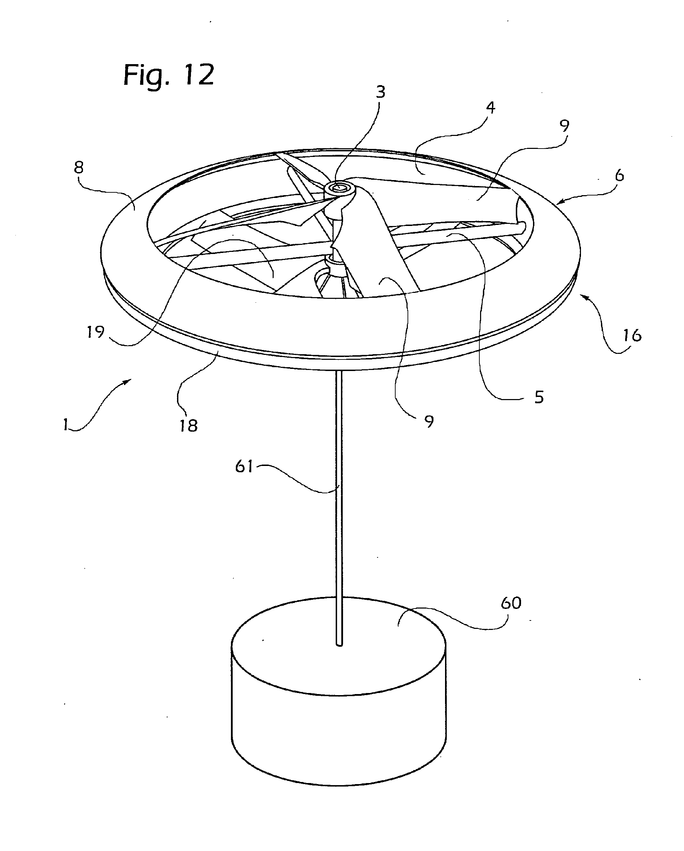

In Figure 12 of the attached drawings there is shown an application of the flying machine 1 according to the invention for the transport of an object 60, for example suspended from this machine by means of a cable or rope 61.

However, the possibilities for use of the flying machine of the invention are many and various: it can be utilised for recognition purposes, for example for control of road traffic, for aerial photography application or for mapping roads and buildings, for surveillance of installations and the like both during the day and/or night both when closed and open.

The machine may also be made with very small dimensions, for example of the order of 150 mm in diameter and in general for the provision of so-called UAV (Unmanned Air Vehicles) with diameters up to 1000 mm.

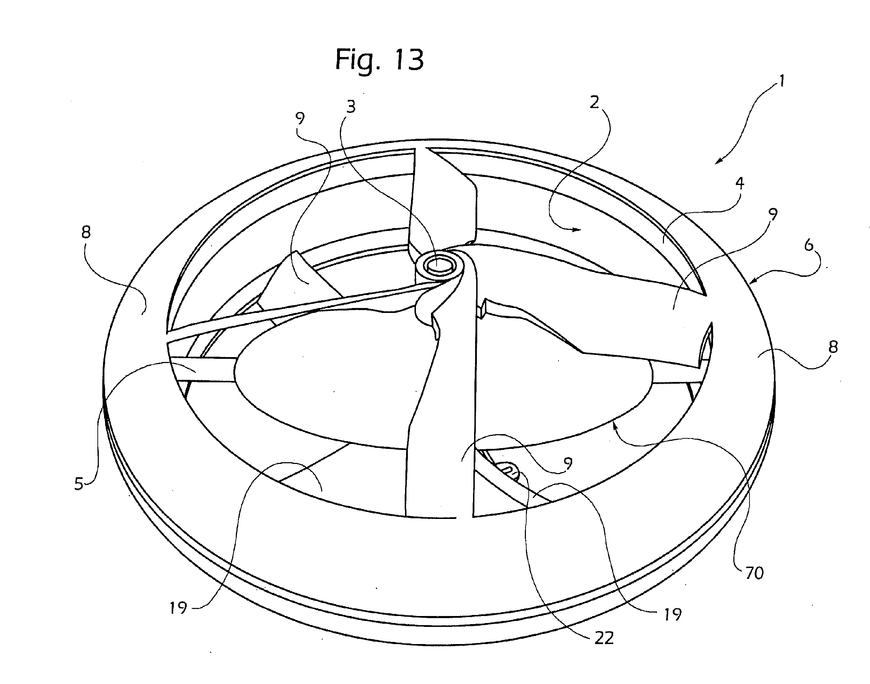

The machine 1 can however also be made with greater dimensions, with a supporting structure 2 which carries a passenger compartment or cell capable of housing at least one passenger, for example in the manner illustrated in figure 13, where such a cell is indicated 70. In this embodiment the passenger compartment cell 70 has a generally ellipsoidal shape interposed between two opposite end potions of the central pin 3 and between portions of spokes 5 which interconnect it with the peripheral ring 4.

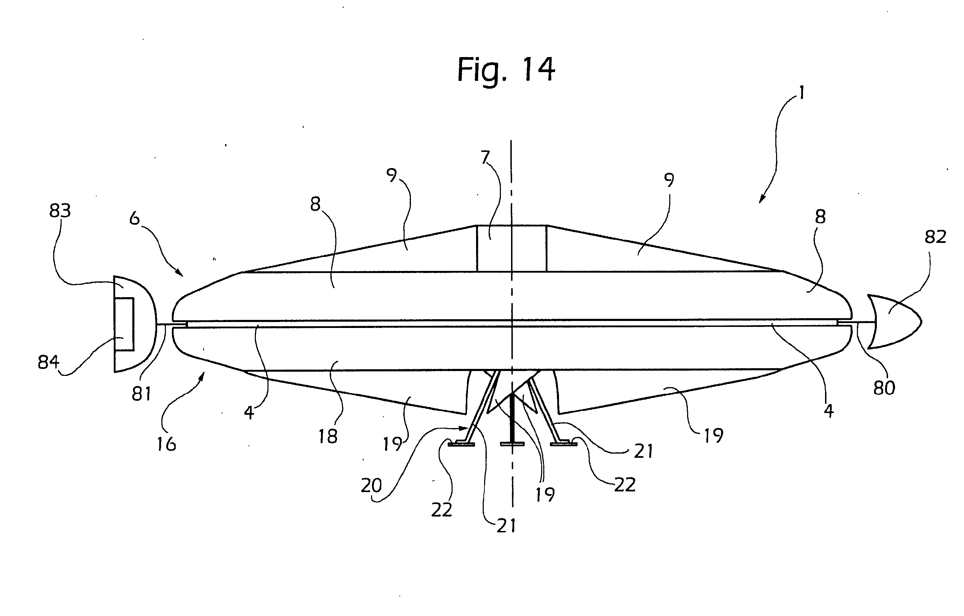

With reference to figure 14, the peripheral ring 4 of the supporting structure 2 of a machine according to the invention can be connected to two extension elements 80 and 81 which extend radial outwardly from diametrically opposite parts beyond the outer edge of the rotors 6 and 16. A cap or radome 82 of aerodynamic shape is connected to the extension 80 and able to house circuits and/or other devices within it.

On the other hand, a tail unit 83 possibly provided with a movable directional rudder 84, is connected to the rear projection 81.

A salient characteristic of the machine in vertical flight, that is to say in ascending or hovering phase, is the efficiency due to the wing-type profile of the two counter rotating rings 8 and 18 to which the ends of the blades 9 and 19 are connecting. As already previously stated, the upper and lower rings 8 and 18 constitute an "aerofoil" comprising two parts which, upon rotating, see the velocity of the air with opposite signs. The velocity difference between the airflow over the upper profile and the airflow over the lower profile is thus maximised. The counter-rotating effect maximises the pressure difference between the upper ring and the lower ring thus maximising the lift.

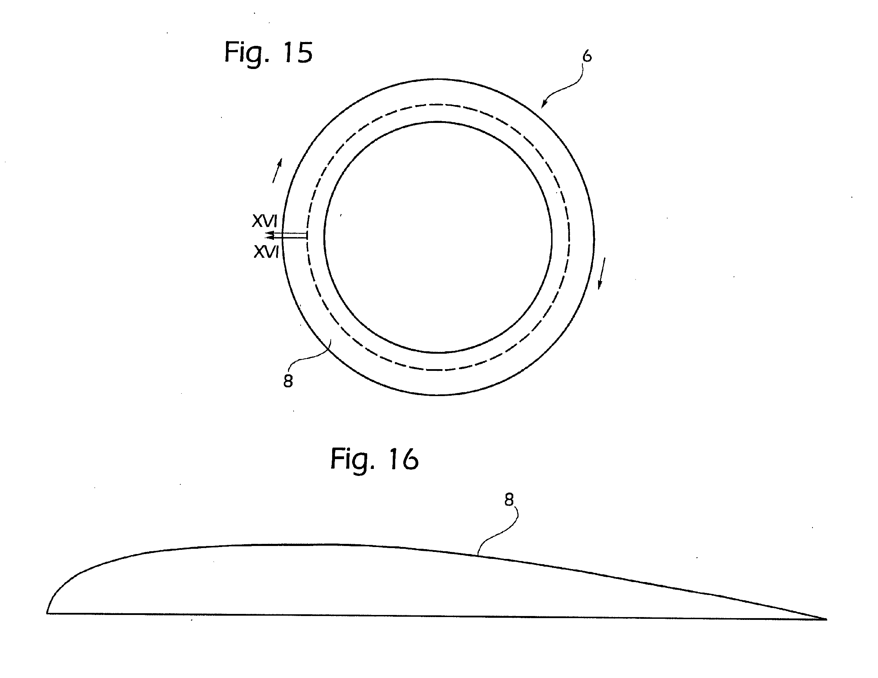

As well as constituting an aerofoil with respect to a vertical transverse section in a plane which contains the axis of rotation, the rings 8 and 18 can be developed with a gradually variable section profile at the same radius. In other words, as is shown in figures 15 and 16, starting from a point of the ring 8 situated at a radial distance r from the axis of the pin 9 and moving over the surface of this ring maintaining the same radius r, the profile of the upper ring 8 over that radius conveniently varies in height until returning to the same height at the starting point, in such a way that the ring has a circumferential profile corresponding to a "slice" of a wing curved and enclosed on itself in the form of a ring. The surface of the ring can, however include, circumferentially, a whole number n≥2 of curved wing profiles facing in the same direction. On the other hand, the surface of the ring from the inner radius to the outer radius also has a wing-like profile.

The same is likewise true for the lower ring 18.

A fixed point in space will see the two upper and lower rings rotate as wing provided with a supporting surface.

The lift due to the two rings sums to that of the blades connected to it. The "torus" constituted in the extreme case by only the rings without the blades can render the use of these superfluous in ascending or hovering flight.

In horizontal flight the counter rotating effect minimises the Heinrich Gustav Magnus force (Panton Ronald, L. "Incompressible Flow", second edition, John Wiley and Sons, New York, NY 1996) which tends to displace the device laterally due to the different velocity of air on the two sides. In effect, from one side the speed of rotation is added to the speed of horizontal flight, whilst from the opposite side the speed of rotation is subtracted from that of horizontal flight. The machine according to the present invention being constituted by two counter-rotating parts cancels the effect of the Magnus force.

A further peculiarity is due to the air guide effect due to the ring being supported by the spokes which, in effect, as compared with the conventional arrangement used in helicopters, behaves as a duct which reduces the turbulence at the tips of the blades. This therefore reduces the tip vortices typical of helicopters. With respect to the "helicopter mode", at the same diameter and power there is up to 30% greater efficiency and lift.

A further peculiarity is associated with the fact that the machine has a peripheral propulsion and therefore requires a propulsion unit with very much lower initial torque with respect to the classical arrangements with the engine located on the axis of rotation.

In comparison with the classical arrangement of helicopters, in machines according to the invention the blades are rigidly attached to the corresponding peripheral ring, and therefore the noise which characterises helicopters, due to the vibration of the blades, is drastically reduced.

A further peculiarity of the machine is the high stability due to the gyroscopic effect, that is to say to the high angular momentum which allows it to balance the "pitch" and "roll" disturbances and renders the machine much less sensitive and vulnerable to side winds.

The outer envelope of the machine which has an essentially ellipsoidal disc shape constitutes a significant peculiarity which gives the system high efficiency in forward flight. The optimum ratio between the radii of the ellipsoid depends on the application; in particular, in relation to the speed in forward flight a ratio of from 4 to 8 can be accepted, with greater values for higher speeds and smaller values when hovering and transport of heavy loads is more important.

To reduce the drag in horizontal flight the profile of the ellipsoid could be preferably pointed.

The number of blades, their angle of attack and their profile will depend, as in the case of helicopters, on the dimensions and transported load. In the case of micro aircraft of dimensions less than 250 mm the use of a rotor with a small number of blades, for example two or three will be preferable. On the other hand in the case of machines of large dimensions, for example greater than two metres, the numbers of blades per rotor could be up to five.

If the machine comprises only a single bladed rotor and is therefore devoid of lower counter-rotating blades, the maximum efficiency will be achieved. In this case the speed of rotation of the two, upper and lower, rings can be different so that their counter-rotating effect balances the device. The propulsion means can be adjusted for this purpose. In particular, in the case of electric propulsion it will be suitable to adopt a control logic implemented by processor or by simple electronics which will adjust the speed of the two annular electric motors in relation to the signal received by sensor means positioned on the spokes or on a platform suspended from them. In the case of fuel-burning propulsion units the thrust on the turbine-means will be adjustable by diaphragms or electronic controls on the power of the combustors themselves.

On the other hand, the presence of two counter-rotating rotors both with blades guarantees the maximum thrust for a given inner diameter of the ring. The two counter-rotating rotors generate an overall lift less than the sum of the thrust of the two independent counter rotating rotors. In particular, with respect to the overall sum of the thrusts of the two independent rotors, the overall thrust is lower when the number of blades is higher and when the upper and lower blades are closer.

If the tail 83 with the rudder 84 of the variant described with reference to Figure 14 is present this tail has the purpose of compensating for the fact that the centre of gravity and the centre of lift do not coincide and, consequently, the overall system tends to displace to the left or right in forward flight.

The tail with the rudder can moreover act in the conventional manner as used in helicopters for the purpose of balancing the effect of the rotation of the machine. In particular, if an arrangement with only upper blades is chosen, this arrangement can be used as an alternative to the differentiation of the velocity of the two upper and lower rings.

A further peculiarity of the machine according to the invention lies in its frontal or lateral guidability in forward flight simply by varying the angle of attack of the rotors by means of the associated electromagnets.

A further peculiarity is tied to the fact that the machine can operate as a "flying wing" at high power density with energy accumulated before flight commences. In effect, the two counter rotors can be driven at a high speed of rotation with an energetic external source. For example, if the propulsion is by means of annular electric motors these can be driven to rotate at high speed by means of a remote accumulator battery. The supply of electric motors can be achieved for example by electric contact through the supporting feet. In this case, in particular for the miniaturised micro aircraft configurations, there is the advantage of causing the rotors to rotate without having to use the on-board batteries, which would be operable only once flight has started and can be of lower capacity and power in that they are not needed for the initial thrust which requires a high power density.

Naturally, the principle of the invention remaining the same, the embodiments and details of construction can be widely varied with respect to what has been described and illustrated purely by way of non-limitative example, without by this departing from the ambit of the invention as defined in the annexed claims.

Thus, for example, within the ambit of the invention are embodiments in which the counter rotor 16 is not present but the driving devices of the flying machine are arranged and managed in a manner known per se in such a way as to be able to ensure the necessary stability of the supporting structure of the machine.

## Claims

1. A flying machine (1), comprising
a supporting structure (2) including a central rotational support (3) with a vertical axis, connected to an essentially horizontal peripheral support part (4), preferably annular, coaxial with the said central support (3),
at least one upper rotor (6) including a central hub (7) rotatable about the central support axis (3) of the supporting structure (2), a channel-section outer ring (8) supported by the peripheral part (4) of the supporting structure (2) by means of contactless suspension means (23-27), preferably magnetic suspension means, and a plurality of blades which extend between the hub (7) and the channel section ring (8) and are inclined with respect to the horizontal plane; and
motor means (40-43; 50-53) carried at least partially by the peripheral part (4) of the supporting structure (2) and operable to cause rotation of the rotor (6) relative to the said structure (2) in a predetermined direction.

2. A machine according to Claim 1, further including a lower rotor (16) including a central hub (17) rotatable about the axis of the central support (3) of the supporting structure (2), and an outer channel-section ring (18) also supported by the peripheral part (4) of the supporting structure (2) by contactless suspension means (24, 25, 27) preferably magnetic suspension means.

3. A machine according to Claim 2, in which the lower rotor (16) further includes a plurality of blades (19) which extend between the channel-section ring (18) and the hub (17) and which are inclined with respect to the horizontal plane oppositely with respect to the blades (9) of the upper rotor (6); the said motor means (40-43; 50-53) being arranged to cause rotation of the lower rotor (16) relative to the supporting structure (2) in an opposite direction from that of the upper rotor (6).

4. A machine according to any preceding claim, in which the ring (8, 18) of the or each rotor (6, 16) has an essentially wing-like outer profile.

5. A machine according to any of the preceeding claims, in which the ring (8, 18) of the or each rotor (6, 16), in circumferential section, has a shape of variable height substantially along a wing profile or a plurality of consecutive wing profiles facing in the same direction.

6. A machine according to any preceding claim, in which the ring (8, 18) of the or each rotor (6,16) is provided with a coaxial array of magnetic means (26, 27) operable to develop an upper polarity and an opposite lower polarity, the said array of magnetic means being vertically interposed between two coaxial arrays of magnetic means (23, 24; 24, 25) with which the peripheral part (4) of the supporting structure (2) is provided, and which are able to develop polarities interacting magnetically, preferably by repulsion, with those of the array of magnetic means (26, 27) of the ring (8, 18) of the or a rotor (6, 16) in such a way that the rotor or rotors (6,16) are magnetically suspended with respect to the peripheral part (4) of the supporting structure (2).

7. A machine according to Claim 6, in which the said magnetic suspension means (23-27) are associated with aspect varying means (23'-25'; 28-31) operable to modify the angle between the plane of rotation of the rotor or rotors (6,16) and the plane of the peripheral part (4) of the supporting structure (2).

8. A machine according to Claim 7, in which the array of magnetic means of the or each rotor (6, 16) is formed with one or more permanent magnets (26, 27).

9. A machine according to Claim 7 or Claim 8, in which the said aspect variator means comprise a plurality of associated, preferably alternating, controllable active magnetic means or electromagnets (23'-25'), in at least one array of magnetic means of the supporting structure (2), operable to alter the magnetic field generated by the said array (23-25) locally and in a controlled manner.

10. A machine according to any of Claims 7 to 9, in which the said aspect variator means comprise a plurality of bulkheads or blades (28-31) radially and controllably displaceable with respect to the peripheral part (4) of the supporting structure (2) in the air gap between the magnetic means (23-25) of the supporting structure (2) and the magnetic means (26, 27) of the rotor or rotors (6, 16) to modify locally the distribution of the magnetic field in the said air gap.

11. A machine according to any preceding claim, in which the said motor means comprise a plurality of fuel-burning propulsion units (40) connected to the said peripheral part (4) of the supporting structure (2) and operable to direct jets of burnt gas towards blade-like formations (42, 43) of the ring (8, 18) or of the rotor or rotors (6, 16) in such a way as to cause rotation thereof in the manner of a turbine or turbines.

12. A machine according to Claim 11, in which the said propulsion units (40) are associated with a fuel tank (41) formed and provided in the said peripheral part (4) of the supporting structure (2) and/or in spokes (5) thereof.

13. A machine according to Claim 11 or Claim 12, in which the said propulsion units (40) are located radially outwardly of the magnetic means (23-25) of the supporting structure (2).

14. A machine according to Claim 2 or Claim 3, and Claim 13, in which the peripheral part (4) of the supporting structure (2) has a transverse section in the form of a fork having three essentially horizontal and vertically superimposed prongs (4a, 4b, 4c) which carry respective magnetic means (23, 24, 25) cooperating with the upper rotor (6) and the lower rotor (16) respectively.

15. A machine according to any of Claims from 11 to 13 and Claim 14, in which the said propulsion units (40) are carried by the prong or intermediate branch (4b) of the peripheral part (4) of the supporting structure (2).

16. A machine according to any preceding Claim, in which the ring (8, 18) of the rotor or rotors (6 ;16) has an essentially C or V shape transverse section with an inner branch (8a; 18a) which inter-penetrates between two prongs (4a, 4b; 4b, 4c) of the peripheral part (4) of the supporting structure (2).

17. A machine according to any of Claims from 1 to 10, in which the said motor means comprise an electric motor machine including windings (50, 51) carried by the peripheral part (4) of the supporting structure (2) and permanent magnet means (52, 53) carried by the or each rotor (6, 16).

18. A machine according to Claims 14 and 17, in which the windings (50, 51) of the electric motor machine are disposed in the spaces defined between the end prongs (4a, 4c) and the intermediate prong (4b) of the peripheral part (4) of the supporting structure (2).

19. A machine according to Claims from 16 to 18 in which the permanent magnet means (52, 53) of the electric motor machine of the or each rotor (6, 16) are carried by the branch (8a, 18a) of the corresponding ring (8, 18) which interpenetrates with the peripheral part (4) of the supporting structure (2) in radially facing relation to the said windings (50, 51).

20. A machine according to any preceding claim, in which the supporting structure (2) carries a passenger compartment (70) able to house at least one passenger.

21. A machine according to Claim 2 or Claim 3 and Claim 20, in which the passenger compartment (70) is interposed between two opposite end portions of the said central pin (3) about which the upper rotor (6) and the lower rotor (16) are mounted.

22. A machine according to any preceding claim, in which the peripheral part (4) of the supporting structure (2) is in the form of a ring.

23. A machine according to any of Claims from 1 to 21, in which the peripheral part (4) of the structure (2) comprises a plurality of segments or sectors of a ring.

24. A machine according to any preceding claim, in which the blades (9) of the upper rotor (6) between the channel section ring (8) of the rotor (6) and the central pin (3) of the supporting structure (2) extend at least partly above the upper edge (8a) of the said channel section ring (8).

25. A machine according to any of Claims 2 onwards, in which the blades (19) of the lower rotor (16) between the channel section ring (18) of this rotor (16) and the central pin (3) of the supporting structure (2) extend at least partly below the lower edge (18a) of the said channel section ring (18).

26. A machine according to any preceding claim, in which the lower end of the central pin (3) of the structure (2) is connected to an undercarriage structure (20) able to support the flying machine (1) on the ground.

27. A machine according to Claim 17, in which the electric motor machine (50-53) can be supplied on the ground from a ground-based energy source to launch the said electric machine (50-53) up to a speed of rotation greater than a predetermined threshold, the flying machine (1) being provided with an on-board source of electrical energy able to supply the electric motor machine (50-53) during flight.

28. A machine according to Claims 26 and 27, in which the electric motor machine (50-53) is arranged to be fed on the ground by a ground-based energy source by an electric connection by contact through the said undercarriage structure.

29. A machine according to any preceding claim, in which the peripheral part (4) of the supporting structure (2) is connected to two extension (80, 81) which extend radially outwardly from diametrically opposite parts beyond the outer edge of the or each rotor (6; 16); one (80) of the said extensions being connected to a cap or radome (82) of aerodynamic shape able to house circuits and on-board devices; the other extension (81) being connected to a tail unit (83) provided with a possible movable rudder (84).
